# EUROPÄISCHE PATENTANMELDUNG

(11) **EP 1 174 208 A2**
(43) Veröffentlichungstag der Anmeldung: **23.01.2002**
(21) Anmeldenummer: 01116364.9
(22) Anmeldetag: 06.07.2001
(51) Int. Cl.: B23K 26/08, B44C 1/22

(54) **Verfahren zur Materialbearbeitung mittels Laser**

(30) Priorität: 10.07.2000 DE 10032981
(71) Anmelder: ALLTECH Angewandte Laser Licht Technologie GmbH, 23569 Lübeck (DE); FOBA GmbH Elektrokik + Lasersysteme, 58513 Lüdenscheid (DE)
(72) Erfinder: Aberle, Hanns-Dieter, Dr., 58256 Ennepetal (DE); Paganelli, Dino, 73610 Saint Alban de Montbel (FR)
(74) Vertreter: Vollmann, Heiko, Dipl.-Ing.

(57) **Zusammenfassung**

Das Verfahren dient zur Materialbearbeitung mittels Laser, insbesondere zur Lasergravur. Der Laserstrahl wird in Spuren (20) über einen Abschnitt (13) einer zu bearbeitenden Fläche (12) eines Werkstücks geführt, wonach das Werkstück so bewegt wird, dass ein benachbarter Abschnitt (14) des Werkstückes in das Bearbeitungsfeld des Lasers gelangt, über das dann der Laserstrahl wiederum in Spuren (20) geführt wird. Zwischen einander benachbarten Abschnitten (13-18) des Werkstückes wird jeweils ein Überlappungsbereich (21) gebildet, dessen Bearbeitung dem einen und dem anderen Abschnitt so zugeordnet wird, dass die Spuren (20), in denen der Laserstrahl auf dem jeweiligen Abschnitt geführt wird, im Überlappungsbereich ineinandergreifen.

## Beschreibung

Die Erfindung betrifft ein Verfahren zur Materialbearbeitung mittels Laser, insbesondere zur Lasergravur, bei dem der Laserstrahl in Spuren über einen Abschnitt einer zu bearbeitenden Fläche eines Werkstücks geführt wird, wonach das Werkstück bewegt wird, um einen benachbarten Abschnitt des Werkstückes in das Bearbeitungsfeld des Lasers zu bringen, über das dann der Laserstrahl wiederum in Spuren geführt wird.

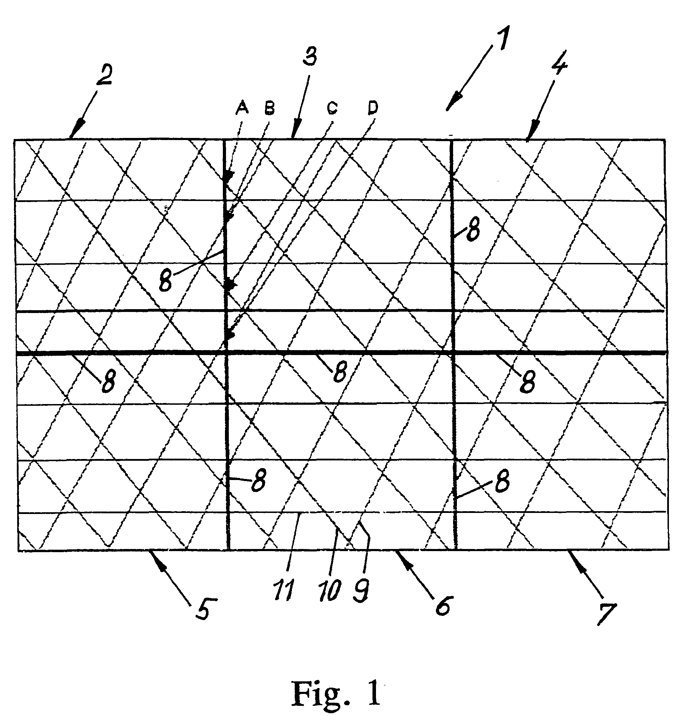

Es zählt zum Stand der Technik, dass sich bei der zweidimensionalen Laser-Mikromaterialbearbeitung von Werkstücken, wie sie zum Beispiel aus DE 42 09 933 C2 bekannt ist, die Spuren des Laserstrahls bei benachbarten Abschnitten auf einer Trennlinie treffen oder berühren, wenn ein Feld bearbeitet werden muss, das größer als das Bearbeitungsfeld des verwendeten Scannerkopfes ist. An den sich ergebenden Trenn- bzw. Grenzlinien kommt es bei Überlappung der Laserimpulse bei der Bearbeitung der Einzelabschnitte zu erhöhtem Materialabtrag, bei Berührung oder nicht ausreichender Überlappung zu reduziertem Materialabtrag. In beiden Fällen werden dadurch die Trenn- bzw. Grenzlinien zwischen den einzelnen Abschnitten deutlich sichtbar, was im Allgemeinen nicht erwünscht ist. Im Falle einer dreidimensionalen Gravur wird in der Regel das abzutragende Volumen schichtweise entfernt, wobei sich der vorstehend beschriebene Effekt noch verstärkt. Den vorstehend beschriebenen Stand der Technik zeigt Fig. 1.

Die Aufgabe der Erfindung besteht in der Verbesserung des einleitend angeführten Verfahrens dahingehend, dass an den aneinander angrenzenden Bereichen eines abschnittsweise zu gravierenden Feldes eines Werkstückes keine Trennlinien oder Übergangsbereiche sichtbar sind.

Die Lösung dieser Aufgabe besteht in einem Verfahren zur Materialbearbeitung mittels Laser, insbesondere zur Lasergravur, bei dem der Laserstrahl ih Spuren über einen Abschnitt einer zu bearbeitenden Fläche eines Werkstücks geführt wird, wonach das Werkstück so bewegt wird, dass ein benachbarter Abschnitt des Werkstücks in das Bearbeitungsfeld des Lasers gelangt, über das dann der Laserstrahl wiederum in Spuren geführt wird, und ist dadurch gekennzeichnet, dass zwischen benachbarten Abschnitten des Werkstückes ein Überlappungsbereich gebildet wird, dessen Bearbeitung dem einen und dem anderen Abschnitt so zugeordnet wird, dass die Spuren, in denen der Laserstrahl auf dem jeweiligen Abschnitt geführt wird, im Überlappungsbereich ineinandergreifen.

Bei einer zweidimensionalen Bearbeitung, d. h. es wird nur eine einzige Schicht abgetragen, wird die zu bearbeitende Fläche in Form eines Gitternetzes in mehrere Abschnitte aufgeteilt. Dabei hat bei einer Brennweite des Scanners von ca. 100 mm der zu gravierende Abschnitt eine Größe von ca. 70 x 70 mm². Um das Problem der erkennbaren scharfen Trenn- bzw. Grenzlinie zu vermeiden, wird beim Zusammenfügen der aneinander angrenzenden Abschnitte erfindungsgemäß ein Überlappungsbereich gebildet, der auf beiden Seiten der betreffenden gemeinsamen Abschnittsgrenze breiter als eine Laserspur ist.

Die einzelnen Spuren der Laserbearbeitung enden innerhalb dieses Überlapppungsbereiches und nicht auf der gemeinsamenGrenzlinie der Abschnitte; das System bzw. die Vorrichtung zur Durchführung des erfindungsgemäßen Verfahrens merkt sich jedoch, wo die einzelne Bearbeitungsspur aufhört, um im nächsten Abschnitt "nahtlos" daran anzuschließen. Dadurch entsteht keine optisch erkennbare Übergangslinie mehr, sondern innerhalb des Überlappungsbereichs eine ungleichmäßige Verteilung von Übergangspunkten, die in dem Überlappungsbereich vorzugsweise vollkommen statistisch verteilt sind, wobei die Verteilung auch durch der Benutzer des Bearbeitungseinrichtung festgelegt werden kann. Solange die Übergangspunkte ausreichend ungeordnet verteilt sind, werden sie nicht mehr als optischer Defekt wahrgenommen und sind damit als Trenn- oder Grenzlinie nicht mehr erkennbar.

Um im Falle der dreidimensionalen Bearbeitung einen nachteiligen Einfluss von übereinandergelegten Schichten zu vermeiden, wird ein Abschnitt nicht komplett bearbeitet, d. h. das Abtragvolumen wird nicht in der ganzen Tiefe entfernt, sondern im gesamten Bearbeitungsfeld schichtweise, d. h. in allen Abschnitten wird das Material zunächst aus einer ersten Schicht entfernt und damit alle Übergänge der ersten Schicht geschaffen. Danach wird eine zweite Schicht bearbeitet bzw. entfernt, und zwar wird die Richtung der parallelen Laserspuren der zweiten Schicht um einen beliebigen Winkel zu den Laserspuren der ersten Schichten verdreht, damit es nicht zu systematischen Überhöhungen der Vertiefungen kommt. Genauso wie bei der beschriebenen einschichtigen Bearbeitung liegen auch die Übergangspunkte der zweiten- und weiteren Schichten jedes Abschnittes in einem Überlappungsbereich entweder um die gleiche oder auch eine verschobene oder gedrehte Abschnittsgrenze verteilt. So wird Schicht um Schicht entfernt, ohne dass die Übergangsbereiche sichtbar werden.

Wenn die Anzahl der Schichten groß genug ist, reicht es auch aus, dass Überlappungsbereiche in einigen wenigen der zuletzt abzutragenden Schichten in der erfindungsgemäßen Weise vorgesehen werden, während Grenzbereiche in den ersten Schichten konventionell aneinandergefügt werden.

Die Erfindung ist nachstehend anhand zweier in der anliegenden Zeichnung schematisch dargestellter Ausführungsbeispiele näher erläutert. Es zeigen:
- Fig. 1: Graviervorgänge, durchgeführt nach einem bekannten Verfahren,
- Fig. 2 + 3: Graviervorgänge, durchgeführt nach dem erfindungsgemäßen Verfahren für eine einschichtige bzw. mehrschichtige Gravierung,
- Fig. 4: einen Ausschnitt einer bearbeiteten Fläche eines Werkstückes in vergrößerter Darstellung.

In Fig. 1 ist eine allgemein mit 1 bezeichnete, mittels Laser bearbeitete Fläche eines zu gravierenden Werkstückes dargestellt, worbei die zu bearbeitende Fläche des Werkstückes hier in sechs Bearbeitungsabschnitte 2 bis 7 unterteilt ist. Jeder Abschnitt entspricht dem Bearbeitungsfeld des verwendeten, bekannten Laserkopfes. Die Grenzen der einander benachbarten Abschnitte sind mit 8 bezeichnet. Bei dem in Fig. 1 gezeigten Feld handelt es sich um ein solches, das in drei Schichten graviert ist. Die Mitten der einzelnen Bearbeitungsspuren des Laserstrahls des Scannerkopfes sind schematisch als Linien 9, 10 und 11 dargestellt. Entlang dieser in einem beliebigen Winkel zueinander verlaufenden Linien bewegt sich der Scannerkopf beim Gravieren. Die einzelnen Bearbeitungsspuren 9, 10 und 11 sind also gegeneinander versetzt, um systematische Überhöhungen der Vertiefungen in den Abschnitten zu vermeiden. Man erkennt, dass die Endpunkte A, B, C und D der Bearbeitungsspuren auf den jeweils gemeinsamen Grenzen 8 der einzelnen Abschnitte 2 bis 7 zu liegen kommen, so dass sich hier Übergangspunkte bilden, die auf einer durch die Grenzen 8 gebildeten Linie liegen. Da die Bearbeitung abschnittsweise erfolgt, d. h. beispielsweise erst der Abschnitt 2 bearbeitet wird, wonach das Werkstück oder der Laserkopf entsprechend verschoben und dann der Abschnitt 3 bearbeitet wird, entstehen diese in Fig. 1 mit A, B, C und D bezeichneten Übergangspunkt. Es handelt sich hierbei nicht um Punkte im eigentlichen Sinne, sondern um Übergangspunkte der einzelnen Spuren, die sich dadurch auszeichnen, dass die Spuren benachbarter Abschnitte beispielsweise geringfügig zueinander versetzt sind, dass der Materialabtrag in diesem Bereich geringfügig vergrößert oder vermindert ist. Diese Übergangspunkte bilden nach dem Gravurvorgang eine optisch sichtbare Grenzlinie, die störend wirkt.

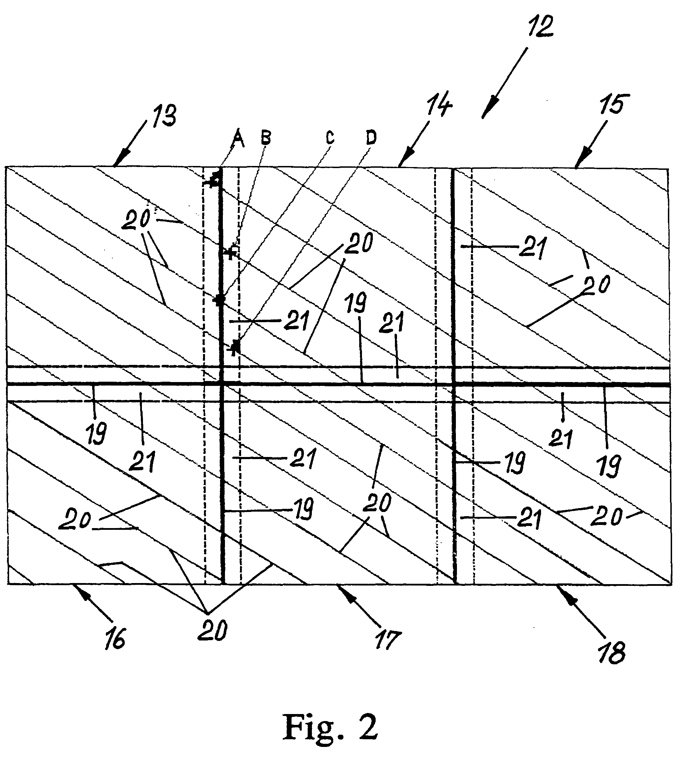

Die Fig. 2 zeigt eine bearbeitete Fläche 12 eines Werkstücks, die ebenfalls in sechs Bearbeitungsabschnitte 13 bis 18 unterteilt ist, die mit ihren Grenzlinien 19 aneinanderstoßen. Es handelt sich bei diesem Beispiel um eine einschichtige Gravur, bei der die Spuren 20, auf denen sich die Mitte des bearbeitenden Laserstrahls bewegt, schematisch als schräge Linien dargestellt sind. Man erkennt, dass zwischen den aneinandergrenzenden Abschnitten 13 bis 18 jeweils ein Überlappungsbereich 21 gebildet ist. Zur Laserbearbeitung dieser Abschnitte werden die Überlappungsbereiche von jeweils aneinandergrenzenden Abschnitten diesen Abschnitten so zugeordnet, dass die Spuren 20, entlang derer der Laserstrahl auf dem jeweiligen Abschnitt geführt wird, in den jeweiligen Überlappungsbereich 21 hineinführen und ineinandergreifen bzw. aneinander anstoßen. Dies ist beispielsweise mit den Kreuzen A, B, C und D, die Endpunkte der einzelnen Bearbeitungsspuren in jedem Abschnitt darstellen, in einem Überlappungsbereich 21 angegeben. Man erkennt, dass die betreffenden Endpunkte der Bearbeitungsspuren in der Regel nicht auf der betreffenden Grenzlinie 19 liegen, sondern sich gleichmäßig verteilt in dem betreffenden Überlappungsbereich befinden. Diese Verteilung der Punkte A, B, C und D ist in allen Überlappungsbereichen gegeben. Durch diese Verteildung der Endpunkte der Bearbeitungsspuren ergibt sich, dass eine Grenzlinie zwischen den einzelnen, aneinandergrenzenden Abschnitten 13 bis 18 nicht mehr sichtbar ist.

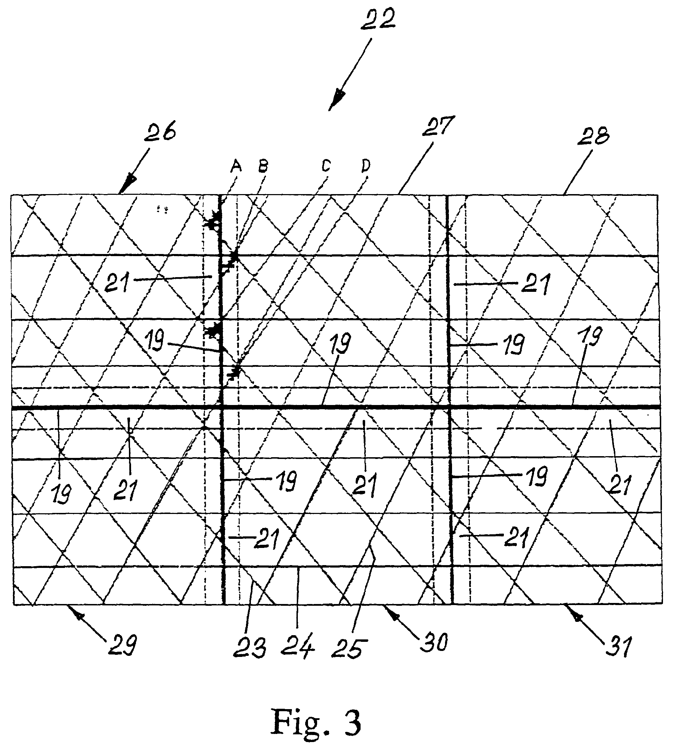

Die Darstellung in Fig. 3 entspricht im Wesentlichen derjenigen in Fig. 2. Ein Unterschied besteht nur darin, dass es sich bei dem Bearbeitungsfeld 22 um drei übereinanderliegend gravierte Schichten handelt, also eine dreidimensionale Laserbearbeitung vorliegt. Zusätzlich zu den ersten Bearbeitungsspuren 23 sind für das dargestellte Bearbeitungsfeld 22 weitere Bearbeitungsspuren 24, 25 vorgesehen, wobei die Bearbeitungsspuren verschiedener Schichten zueinander winkelversetzt sind. Auch in diesem Fall sind Überlappungsbereiche 21 der aneinandergrenzenden Abschnitte 26 bis 31 vorgesehen, in denen die Endpunkte der Bearbeitungsspuren der Laserköpfe unregelmäßig verteilt vorhanden sind.

Die Bearbeitung gemäß Fig. 3 erfolgt derart, dass zunächst beispielsweise im Abschnitt 26 eine Materialabtragung längs der Spuren 23 erfolgt, wobei die Spuren 23 in den Übergangsbereichen 21 unregelmäßig verteilt enden. Nachfolgend wird das Werkstück bzw. der Laserkopf verschoben, um den Abschnitt zu bearbeiten, wobei die Bearbeitung im Übergangsbereich an den Punkten A und C ansetzt, so dass sich insgesamt eine gleichmäßige Bearbeitung auch in diesem Übergangsbereich ergibt, lediglich die Übergangspunkte in diesem Bereich verteilt liegen. Wenn das gesamte Werkstück auf diese Weise bearbeitet worden ist, erfolgt eine Bearbeitung längs der Spuren 25 sowie dann längs der Spuren 24 oder umgekehrt. Es erfolgt also nicht, wie beim Stand der Technik, eine vollständige Bearbeitung des jeweiligen Abschnitts 26 bis 31, sondern zunächst die Bearbeitung aller Abschnitte in einer Schicht, wonach der Abtrag der darunterliegenden Schicht wiederum abschnittsweise erfolgt. Dadurch, dass die Spuren übereinander bzw. untereinanderliegender Schichten versetzt, vorzugsweise winkelversetzt zueinander angeordnet werden, und dass bei der schichtweisen Bearbeitung Überlappungsbereiche 21 vorgesehen sind, ergibt sich sowohl bei zwei- als auch bei der hier dargestellten dreidimensionalen Bearbeitung ein optisch homogenes Bearbeitungsergebnis ohne sichtbare Übergänge zwischen den Bearbeitungsabschnitten.

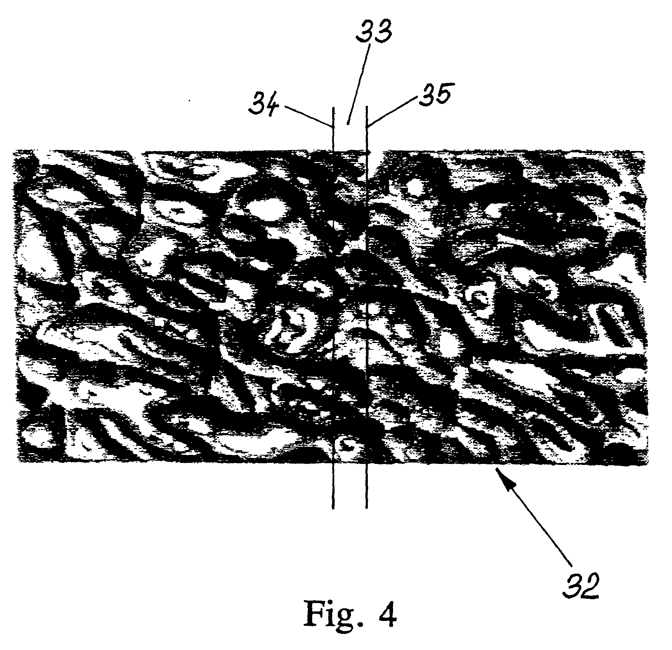

Fig. 4 zeigt einen Ausschnitt 32 einer bearbeiteten Fläche eines Werkstückes in vergrößerter Darstellung. Der bearbeitete Flächenausschnitt 32 zeigt in seinem Übergangsbereich 33 zwischen den Linien 34 und 35, dass keinerlei Endpunkte bzw. Übergangspunkte der Bearbeitungsspuren des Scannerkopfes von zwei aneinandergrenzenden, mittels Laserstrahl bearbeiteten Abschnitten eines gravierten Werkstückes erkennbar sind.

## Patentansprüche

1. Verfahren zur Materialbearbeitung mittels Laser, insbesondere zur Lasergravur, bei dem der Laserstrahl in Spuren (20) über einen Abschnitt (13) einer zu bearbeitenden Fläche (12) eines Werkstücks geführt wird, wonach das Werkstück bewegt wird, um einen benachbarten Abschnitt (14) des Werkstücks in das Bearbeitungsfeld des Lasers zu bringen, über das dann der Laserstrahl wiederum in Spuren (20) geführt wird, **dadurch gekennzeichnet, dass** zwischen einander benachbarten Abschnitten (13 -18) des Werkstückes jeweils ein Überlappungsbereich (21) gebildet wird, dessen Bearbeitung dem einen und dem anderen Abschnitt so zugeordnet wird, dass die Spuren (20), in denen der Laserstrahl auf dem jeweiligen Abschnitt geführt wird, im Überlappungsbereich ineinandergreifen.

2. Verfahren nach Anspruch 1, bei dem das Werkstück in mehreren Schichten abtragend bearbeitet wird, **dadurch gekennzeichnet, dass** die Bearbeitung mehrerer benachbarter Abschnitte (26 - 31), vorzugsweise aller Abschnitte zuerst in einer Schicht erfolgt, wonach die Bearbeitung der nächsten, darunterliegenden Schicht dieser Abschnitte erfolgt.

3. Verfahren nach Anspruch 2, **dadurch gekennzeichnet, dass** die Bearbeitung nachfolgender Schichten in Spuren (23, 24, 25) erfolgt, die zueinander winkelversetzt angeordnet sind.
